# EUROPEAN PATENT SPECIFICATION

(11) **EP 2 765 291 B1**
(45) Date of publication and mention of the grant of the patent: **10.04.2019**
(21) Application number: 13154312.6
(22) Date of filing: 07.02.2013
(51) Int. Cl.: F02D 41/06, F02D 41/40, F02D 41/30, F02P 19/00

(54) **Method for operating a compression ignition internal combustion engine with direct fuel injection**
Verfahren für den Betrieb eines Direkteinspritzverbrennungsmotors mit Kompressionszündung
Procédé pour faire fonctionner un moteur à combustion interne à allumage par compression à injection directe de carburant

(43) Date of publication of application: 13.08.2014
(73) Proprietor: Volvo Car Corporation, 40 531 Göteborg (SE)
(72) Inventor: Dahlgren, Jan, 42339 Torslanda (SE); Karlsson, Magnus, 44445 Stenungsund (SE); Karlsson Lindhardt, Göran, 42355 Torslanda (SE)
(74) Representative: Kransell & Wennborg KB

(56) References cited:
- EP-A2- 0 534 491
- EP-A2- 1 035 314
- EP-A2- 1 424 481
- WO-A1-02/06657
- GB-A- 2 446 691
- US-A1- 2007 056 553
- US-A1- 2012 004 833

## Description

### TECHNICAL FIELD

The present invention relates to a method for operating a compression ignition internal combustion engine, in particular a diesel engine, with direct fuel injection in the post-start phase at low temperatures.

### BACKGROUND ART

In order to reduce emissions and fuel consumption, vehicle manufacturers are constantly making improvements to engine components and engine operating strategies. One way of reducing emissions and fuel consumption is to downsize the internal combustion engine for existing vehicle models.

A problem relating to downsizing of engines is the reduced torque output of an engine having combustion chambers with a smaller swept volume. When the engine is operated under normal conditions, this problem can be overcome by supercharging the engine, making changes to the gearbox and drivetrain or by reducing the overall weight of the vehicle.

However, such modifications will have little effect, for instance, during a cold start of the engine, in particular when starting the engine at low ambient temperatures. Low ambient temperatures are defined as temperatures below freezing, for instance -30 °C to 0 °C. At low temperatures the engine must overcome the friction between moving components, which requires a friction torque that increases with descreasing temperatures. When an engine is downsized, there could be a problem if the engine torque is insufficient for overcoming the friction torque. US2012/0004833 describes a known method for operating a compression ignition internal combustion engine.

This invention aims to solve these problems by providing an improved method for starting a compression ignition internal combustion engine at low temperatures.

### DISCLOSURE OF INVENTION

The invention relates to a method for operating a compression ignition internal combustion engine, according to claim 1 and its dependent claims.

In the subsequent text the abbreviation CAD is used for "crank angle degrees"; TDC is used for "top dead centre"; and BTDC is used for "before top dead centre". The latter refers to a CAD positon or range before the TDC position at 720° CAD at the end of a compression phase.

According to a preferred embodiment, the invention relates to a method for operating a compression ignition internal combustion engine including at least one combustion chamber with a fuel injector for direct fuel injection into a combustion chamber and a glow plug for assisting compression ignition of the fuel and combustion air mixture supplied to the combustion chamber in a start phase. The engine is controlled by means of an electronic control unit, or ECU for controlling at least injection timing and injected amount for the fuel injector. The method comprises the steps of:
- supplying the combustion air to the combustion chamber in an engine intake stroke;
- performing a by injecting a start-up pilot fuel quantity by means of the fuel injector into the combustion air supplied to the combustion chamber during a cold start of the internal combustion engine, said start-up pilot injection forming a homogeneous, lean air/fuel mixture in substantially the entire combustion chamber; and
- performing a stratified fuel injection by injecting a second fuel quantity into the combustion chamber during a compression stroke directly before the ignition time, said stratified fuel injection being carried out as a multiple injection, comprising at least one pilot injection and a main injection, each forming a stratified, rich air/fuel mixture in the region of the glow plug and autoigniting the stratified rich air/fuel mixture at a predetermined ignition time during the compression stroke after any one of the stratified fuel injections;
wherein the start-up pilot injection is performed during a period between initialization of a cranking phase of the internal combustion engine until at least one predetermined engine operating condition has been fulifilled.

According to one example for an injection strategy in direct-injection compression ignition engines, or diesel engines, the engine is operated in the so-called homogeneous operating mode in the initial seconds during a cold start at low ambient temperatures of -30 to ±0 degrees C. The start-up pilot injection is performed below a predetermined ambient temperature, and is controlled by ambient pressure and values for coolant temperature stored in a map in electronic control unit. Not according to the invention, here, in the diesel engine, an early, extra injection is performed between 420 and 60 CAD BTDC, preferably between 120 and 60 CAD BTDC, but no later than between 80 and 60 CAD BTDC. The extra injection, or start-up pilot injection, is a homogenous injection that must be performed before the subsequent stratified injections starting with the first of a number of pilot injections preceeding a main injection. The injection timing and amount of fuel injected is dependent on at least the coolant temperature, which is a sensor reading available from the time of engine-on. As a result of the intake air flowing in and the flows generated in the combustion chamber by the downward movement of the piston, the injected fuel is mixed uniformly with the fresh air as the piston moves upwards during the compression stroke. The charge thus generated in the combustion chamber is completely homogenized, that is to say substantially the same air/fuel mixture is present in the entire combustion chamber.

In order to ensure reliable combustion of the fresh mixture, the air/fuel mixture in the vicinity of a glow plug must be slightly rich, that is to say have a slight excess of fuel, at the time of ignition. However, since the mixture created by the extra injection is uniformly/homogeneously distributed throughout the entire combustion chamber in the homogeneous operating mode, a slightly rich mixture must be generated in the vicinity of a glow plug in the combustion chamber. This is achieved by performing a stratified injection during the compression phase, to create a slight excess of fuel surrounding the glow plug prior to ignition. The stratified injection is performed as a multiple injection, comprising at least two pilot injections and a main injection. The stratified injection is directed into a cavity in the upper surface of the piston, which cavity retains the rich mixture in the vicinity of the glow plug at the piston approaches TDC.

The alternative to a stratified injection would be to make the homogeneously distributed mixture slightly richer. However, as a result of the lack of oxygen during combustion, this brings about increased emissions of carbon monoxide and unburned hydrocarbons. The incomplete transformation of the energy in the fuel also results in increased fuel consumption. During a cold start at very low temperatures, excess fuel condenses out of the fresh charge onto the still-cold combustion chamber walls and onto the piston head in the post-start phase. This fuel is then no longer available for combustion and must be compensated for by an increased injection quantity in order to prevent the air/fuel mixture from becoming too lean. An overly lean mixture would, as a result of its worse combustibility at the relatively low combustion chamber temperatures after the cold start, lead to rough engine operation or even to instances of misfiring. Neither is acceptable for reasons of driving comfort and pollutant emissions. The fuel which is condensed onto the combustion chamber wall and onto the piston head is present there in liquid form. Said fuel is no longer involved in the actual torque-generating combustion. The evaporated fuel in the direct vicinity of the cold combustion chamber walls is also no longer involved in the combustion process as a result of so-called "quenching". Here, the combustion is also deprived of heat and therefore energy by the cold combustion chamber walls. This leads to a reduction in the combustion speed, to the where the flame may be extinguished in the vicinity of the combustion chamber wall. As a result, a layer of unburned hydrocarbons forms in front of the combustion chamber wall. During the exhaust process, the upward-moving piston scrapes the fuel from the combustion chamber wall and causes it to escape, unburned, through the open exhaust valve into the exhaust duct. This results in high HC emissions. Fuel that condenses on the cylinder wall can also escape past the piston compression rings and cause dilution of the lubricant in the crankcase. The fuel which is not involved in the combustion process must also be compensated for by an increased injection quantity, so that a sufficient fuel and therefore energy quantity for generating the required torque for engine operation is available in those regions of the combustion chamber in which the fresh charge can be involved in the combustion process. Specifically after a cold start at very low temperatures, this requires very high fuel injection quantities which can be a multiple of the injection quantity at full load. In this context, it is also significant that the injection quantity required after the cold start determines the minimum feed quantity of an electric fuel pump or of a high pressure pump.

It is therefore an object of the invention to provide a method for operating an internal combustion engine which avoids the above described problems with condensation and unburnt fuel in a purely homogeneous operating mode during a cold start. The engine control is used for operating the internal combustion engine in a cold start phase and should also in particular reduce the required injection quantity at very low temperatures, permitting a further reduction in pollutant emissions and permitting a required high pressure pump to be relatively small. The duration of the start phase extends from the initialization of a starter motor or motor generator operation, or cranking phase for cranking of the engine, until at least one predetermined engine operating condition has been fulifilled. If multiple conditions are applied, the cold start engine control ends when at least one of the conditions is fulfilled. The predetermined condition includes an engine speed rangeThe engine can be operated according to the inventive method up to an engine speed of 500 rpm,. The lower limit of this range is dependent on factors such as the cranking speed imparted to the engine by the type of engine start assisting device used and the current SOC of the starter battery. At the engine starting time the crank shaft is rotated by an engine start assisting device such as a starter motor or motor generator. The torque supplied by the starter motor will supplement the torque output by the engine during the initial combustions to allow the combustions to stabilze. During operation of the start assisting device n the engine speed is as low as, e.g., 100-200 rpm. The upper limit of the range at which the injection strategy is used can be selected at a value where it can be established that the friction torque is exceeded by the indicated torque output. The indicated torque output must be greater than the friction torque before the starter motor is deactivated and the engine speed can increase towards idling speed. The idling speed is dependent on the size and type of engine and is commonly between 600 and 1200 rpm. One condition for ending the injection strategy can be that the engine speed increases past 500 rpm, before settling at a predetermined idling speed.

An alternative condition not according to the invention can be that the engine can be operated using this method for the first 5-10 combustions, that is the first 10-20 crankshaft revolutions after an initial combustion in any one combustion chamber of the engine. A further alternative condition not according to the invention can be that the engine can be operated using this method until the indicated torque output by the engine exceeds the friction torque. In the latter example, the indicated torque is proportional to the indicated mean effective pressure (IMEP) in a cylinder and represents the mean torque over an engine cycle (720 CAD). The friction torque increases with lower temperatures and must be exceeded by the indicated torque before the engine speed can increase towards idling speed.

The extra injection can comprise 1-30 %, preferably 10-30 %, of the total injected amount of fuel during an engine cycle. The remaining amount of fuel is distributed over the pilot and main injections, wherein the combined amounts for the at least one pilot injection makes up 5-15 % and the main injection makes up 50-75 % of the total injected amount of fuel. The injected relative amounts depend on the coolant temperature and ambient pressure and is selected from maps stored in the ECU. As the ambient temperature drops, resulting in a lower coolant temperature, the amount of fuel injected in the extra or start-up injection will increase. According to one example not according to the invention, if the coolant temperature drops below a predetermined value, the engine control method using the extra or start-up injection can be initiated. The injection timing within the interval 420 and 60 CAD BTDC is also selected from maps stored in the ECU. The timing and amount of fuel injected during the the extra injection can also be dependent on one or more sensor readings available from the time of engine-on or immediately thereafter.

The method according to the invention aims to provide an injection strategy for an internal combustion engine. The method is used during a cold-start phase of the internal combustion engine, that is in the time between initiation of engine cranking and attaining a stable idling speed, and also at very low temperatures, that is in intake air temperatures below freezing. The method provides for increased torque during start up, reduced fuel consumption with simultaneously reduced pollutant emissions and a more reliable combustion for early compression ignition cycles.

The operating period during which the injection strategy is used will be explained with reference to the attached figures. The so-called start-up phase begins as the engine cranking is initiated, when the friction torque of the cold engine is at its highest. The low-temperature problems described in the introduction are relevant in this start-up phase. The problems mentioned become less severe as the combustion chamber walls and the piston head warm up and the combustions stabilize.

The injection strategy is terminated when the indicated torque exceeds the friction torque, allowing the speed at the end of the start-up phase of the internal combustion engine to increase towards a predetermined idling speed. When the speed at the end of the start-up phase increases past a predetermined limit, then the start-up phase is deemed to be completed. The engine is operated under open-loop control during the cold-start phase, as the lambda sensors have not reached an operational state where they can take over the task of metering the mixture, and the mixture composition can be adjusted such that the fuel involved in the combustion process together with the fresh air result in a stoichiometric air/fuel ratio (lambda = 1).

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows a schematic illustration of a compression ignition engine according to the invention;
- Figure 2: shows a diagram plotting friction torque and indicated torque over ambient temperature;
- Figure 3: shows a diagram where the IMEPh and friction torque is plotted over engine speed at a predetermined temperature;
- Figure 4: shows a first diagram where cylinder pressure is plotted over CAD, indicating the injection timing for an injection strategy according to the invention; and
- Figure 5: shows a second diagram where cylinder pressure is plotted over CAD, indicating the injection timing for an injection strategy according to the invention.

### EMBODIMENTS OF THE INVENTION

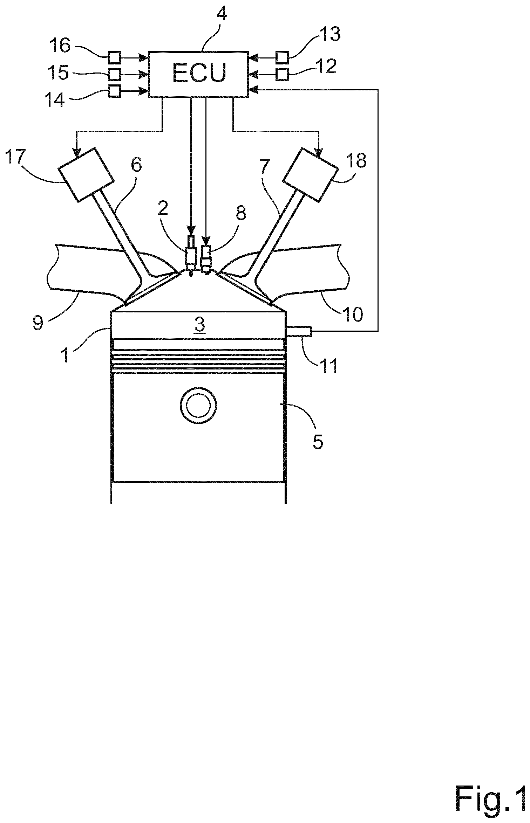

Figure 1 shows a schematic illustration of a compression ignition engine according to the invention. The engine is provided with at least one cylinder 1 and comprises a fuel injector 2, through which fuel is injected into a combustion chamber 3, for each cylinder. A fuel injection control unit 4, also termed an electronic control unit ECU, controls fuel injection quantity per combustion cycle injected through each fuel injector. A piston 5 in the engine cylinder has a compression action that causes a mixture of air and fuel within the combustion chamber to be ignited during operation. The piston 5 has a bowl in its upper surface. The cylinder is provided with at least one inlet valve 6 for admitting gas which includes fresh air into said cylinder and at least one exhaust valve 7 for exhausting combusted gases from said cylinder. Air is supplied through an intake conduit 9 connected to an intake manifold, while exhaust gas is exhausted through an exhaust conduit 10. During operation, the ignition of the fuel/air mixture is controlled by cylinder pressure and is assisted by a glow plug 8.

The control unit receives signals from at least one sensor for measuring engine operation parameters, which sensors include a combustion chamber pressure sensor 11, an intake manifold pressure sensor 12 and a λ-probe 13 in the exhaust conduit, as well as temperature sensors for intake air 14, engine coolant 15 and engine oil 16. The control unit controls the intake and exhaust valves 6, 7 by means of valve actuators 17, 18. The actuators may be either electrically or mechanically operated. In order to perform the method according to the invention, at least the temperature sensor for engine coolant is required.

The electronic control unit ECU comprises software, algoritms and engine control maps for carrying out an injection strategy method accoding to the invention. A vehicle of this type can be manufactured with a number of different engines, each having predetermined specifications. For environmental reasons and for reasons of fuel economy it is desirable to manufacture vehicles to be classified as so called "green cars". For existing models of vehicles, one way of complying with the environmental classification is to downsize the engines used. In order to compensate for the reduction in power output, an engine with a smaller swept cylinder volume can be provided with modified engine control software combined with a turbocharger and/or a compressor in order to retain a similar engine performance and to maintain driveability under normal operating conditions. However, such intake air charging devices are not operating at the time of engine-on, which reduces the torque output available for overcoming friction torque.

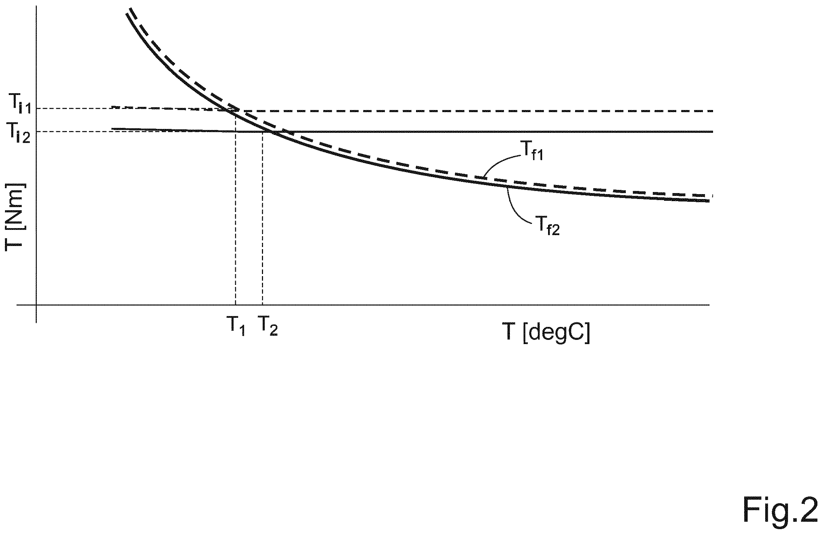

Figure 2 shows a diagram plotting friction torque T_{f} and indicated torque Tᵢ over ambient temperature for a 2.4 litre diesel engine and a downsized 2.0 litre diesel engine respectively. The curves for the 2.4 litre diesel engine is shown in dashed lines. From the figure it can be seen that an indicated torque Tᵢ₁ of 172 Nm for the 2.4 litre diesel engine is sufficient for overcoming the friction torque down to an ambient temperature T₁ of -24 °C. For the 2.0 litre diesel engine the corresponding indicated torque Tᵢ₂ of 142 Nm is only sufficient for overcoming the friction torque down to an ambient temperature T₂ of -19 °C. In both cases the indicated mean effective pressure (IMEP) is 9 bar. By implementing the injection strategy according to the invention, the downsized engine can increase the indicated torque output to allow the engine to be started at temperatures below -24 °C. Additional assistance can be provided by a starter motor that can crank the engine at relatively high speeds.

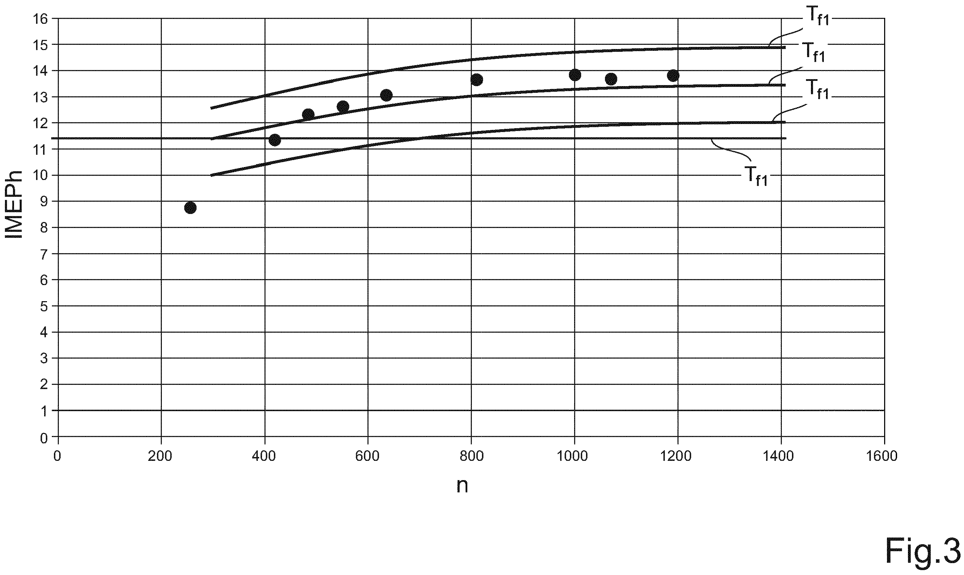

Figure 3 shows a diagram where the IMEPh (bar) and friction torque T_{f} (bar) is plotted over engine speed n (rpm) at a predetermined temperature (°C). IMEPh is the indicated mean effective pressure calculated by considering only the work delivered to the piston over the compression and expansion strokes. The friction torque, in this case expressed as a pressure, is constant during the start-up process and is shown as a straight line at 11,14 bar for the 2.0 litre diesel engine referred to above. The curves, from the upper to the lower curve, indicate the theoretical torque output T_{λ1}/T_{λ2}/T_{λ3} of the engine for lambda values of 1,05/1,20/1,37, respectively .

The points indicate the IMEPh (bar) for a predetermined cylinder during the first 18 engine revolutions during start-up. As the engine is cranked up to 200 rpm by the starter motor immediately after engine-on, the first value will be plotted as the first combustion in this cylinder occurs above this engine speed. The torque supplied by the starter motor will supplement the torque output by the engine during the initial combustions to allow the combustions to stabilize.

The plotted values for IMEPh for the monitored cylinder can be seen to exceed the friction torque after the second combustion. The engine speed reaches 500 rpm before the fourth combustion, which means that the fuel injection strategy has been terminated between the third and fourth combustions in the monitored cylinder, which is indicated by the levelling out of the IMEPh after the third combustion. From this it can be seen that, as a rule, the number of combustions requiring the injection strategy increases with lower ambient temperatures at start-up.

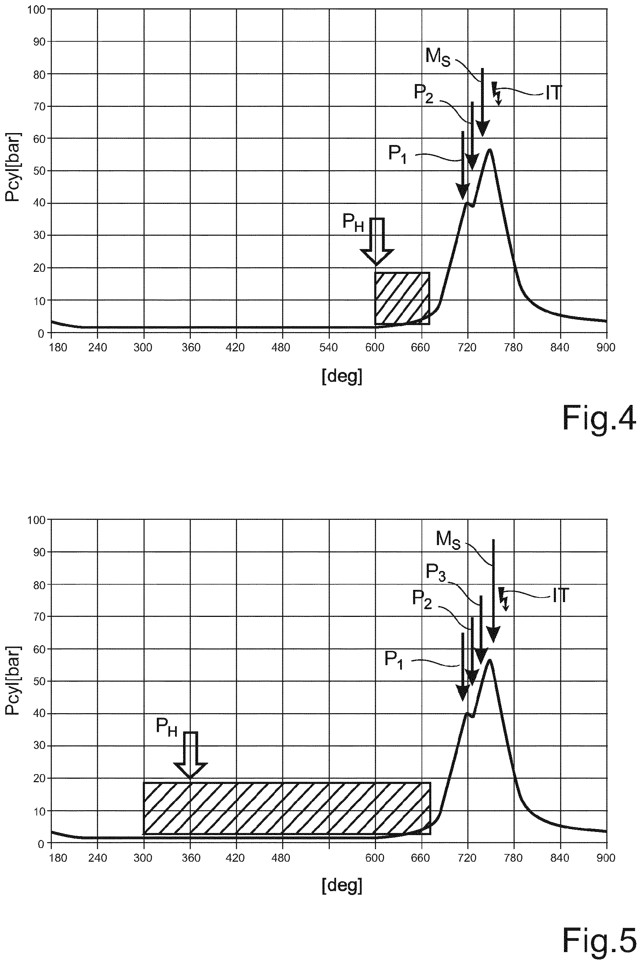

A number of exemples of the injection strategy are explained in more detail below on the basis of the illustrations in Figures 4-5. One feature of the method according to the invention is the division of the injected fuel into two parts, specifically into a homogeneous pilot injection P_{H} and a stratified injection comprising at least one pilot injection and a main injection. In the examples shown the stratified injection is described as having a first and second pilot injection P₁, P₂ and a main injection M_{S}.

Figure 4 shows a first diagram indication the injection timing for an injection strategy . Each injection carried out during a start-up of the internal combustion engine is plotted against the crankshaft angle degrees CAD.

Initially, in the intake stroke of the internal combustion engine 10, a first fuel quantity is injected in a start-up pilot injection P_{H}, so that a homogeneous air/fuel mixture with an air/fuel ratio of lambda λ > 1, for instance 1,02 < λ < 1,2, is formed in the entire combustion chamber.

This first homogeneous injection can be performed between 420 and 60 CAD BTDC, wherein the timing and amount of fuel is dependent on the coolant temperature and ambient pressure. This start-up pilot injection can comprise 10-30 %, preferably 10-20% of the total injected amount of fuel during an engine cycle and is selected from a suitable map stored in the electronic control unit of the engine.

The example shown in Figure 4 occurs when the ambient temperature is only a few degrees below freezing, for instance between ±0 and -10 °C, the additional torque required for starting the engine is relatively low. In this case a relatively small fuel quantity is injected, and a lean air/fuel mixture of, for example lambda 1,1-1,2, is generated in the entire combustion chamber. The exact amount to be injected start-up pilot injection P_{H} can be about 10 % of the total amount injected and is selected from a map for the current coolant temperature. Similarly, the injection timing is also selected from a suitable temperature related map. As the amount of fuel is relatively low, the injection timing can be as late as between 120 and 60 CAD BTDC, as indicated in Figure 4, or even between 80 and 60 CAD BTDC, while achieving a homogenous air/fuel mixture and avoiding the fuel injection jet impinging on the cold piston head. In comparison with the rich air/fuel mixture in a conventional homogeneous injection, the quantity of the fuel which condenses on the combustion chamber walls and on the piston head is thus considerably reduced. There is also less evaporated fuel, whereby only a correspondingly smaller amount can be quenched, in the boundary layer in the vicinity of the combustion chamber walls. Since the fuel quantity involved in the combustion process is reduced in this way, the emissions of unburned hydrocarbons are also considerably reduced. The fuel quantity injected is likewise considerably reduced by means of said injection strategy, which, in turn, reduces the size of the high pressure fuel pump needed.

After the start-up pilot injection P_{H} and around the timing of the ignition time IT, a second fuel quantity is injected, as a stratified injection, into the combustion chamber. The ignition time IT corresponds to the normal ignition time in a stratified operating mode of the internal combustion engine and, depending on the operating point of the internal combustion engine, occurs between approximately 15 CAD BTDC and approximately -5 CAD BTDC before the piston reaches the top dead center position (TDC).

The stratified injection is split into a multiple injection, comprising a first and a second pilot injection P₁, P₂ and a main injection M_{S} during the compression stroke. In order to ensure the optimum formation of the injection jet for compression ignition at the ignition time IT, the injection time of the main injection M_{S} is coupled to the ignition time IT. Said coupling is carried out by means of a spacing angle delta, which is dependent on the operating point, between the end of the stratified main injection M_{S} and the ignition time IT. This spacing angle delta is preferably in a crankshaft angle range of approximately 15 CAD BTDC to approximately 1 CAD BTDC before the ignition time IT. The pilot injections P₁, P₂ are performed from approximately 50 CAD BTDC and before the main injection M_{S}.

The example shown in Figure 5 occurs when the ambient temperature is considerably below freezing, for instance below -10 °C, the additional torque required for starting the engine increases with reducing temperature. In this case a relatively larger fuel quantity is injected, and a slightly lean air/fuel mixture of, for example lambda 1,02-1,05, is generated in the entire combustion chamber. The exact amount to be injected start-up pilot injection P_{H} can be between 10 and 20 % of the total amount injected and is selected from a map for the current coolant temperature and ambient pressure, as explained above. Similarly, the injection timing is also selected from a suitable coolant temperature related map. As the amount of fuel is relatively higher, the injection timing can be as early as 420 CAD BTDC and until 60 CAD BTDC (indicated in Fig.5), during the intake phase, for achieving a homogenous air/fuel mixture and avoiding the fuel injection jet impinging on the cold piston head. Even in this case, the quantity of the fuel which condenses on the combustion chamber walls and on the piston head is thus considerably reduced. The possible range for the start-up pilot injection P_{H}, 420 CAD BTDC and until 60 CAD BTDC, is indicated in Fig.5.

After the start-up pilot injection P_{H} and around the timing of the ignition time IT, a second fuel quantity is injected, as a stratified injection, into the combustion chamber. The ignition time corresponds to the normal ignition time in a stratified operating mode of the internal combustion engine and, depending on the operating point of the internal combustion engine, occurs between approximately 15 CAD BTDC and approximately -5 CAD BTDC before the piston reaches the top dead center position (TDC).

As described above, the stratified injection is split into a multiple injection, comprising a first and a second pilot injection P₁, P₂ and a main injection M_{S} during the compression stroke. In order to ensure the optimum formation of the injection jet for compression ignition at the ignition time IT, the injection time of the main injection M_{S} is coupled to the ignition time IT. Said coupling is carried out by means of a spacing angle delta, which is dependent on the operating point, between the end of the stratified main injection M_{S} and the ignition time IT. This spacing angle delta is preferably in a crankshaft angle range of approximately 15 CAD BTDC to approximately 1 CAD BTDC before the ignition time IT. The pilot injections P₁, P₂ are performed from approximately 50 CAD BTDC and before the main injection M_{S}.

The purpose of the stratified main injection M_{S} is to form a slightly rich charge (lambda < 1) in the vicinity of the glow plug at the ignition time IT, which charge is reliably combusted. Reliable combustion is obtained by producing optimum conditions around the glow plug at the ignition time IT. The flame front can then progress from said region into those regions of the combustion chamber in which the charge mixture is actually flammable but cannot be reliably ignited, as it is a relatively lean homogenous air/fuel mixture. The influence of the lean air/fuel mixture is to increase the combustion efficiency and the torque generated during the period of time when the start-up injection strategy is carried out.

While, in the first exemple of Figure 4, the stratified main injection M_{S} took place in the form of a single injection, in the second exemplary embodiment of Figure 5, the stratified main injection M_{S} is carried out directly before the ignition time IT in the form of a double injection with a first stratified injection P₁ and a second stratified injection P₂ within a few milliseconds. Because the stratified injection is carried out in a clocked fashion as a multiple injection, the mixture formation of the rich charge in the region of the glow plug is further improved on account of better mixture of the fuel vapor with the fresh air. In addition, the multiple injection also further increases the degree of turbulence in the region of the glow plug and therefore further stabilizes combustion.

In the above exemples, the stratified injection is carried out as a double pilot injection with a first and a second stratified pilot injection P₁, P₂ and a main injection M_{S}. In a further exemple the stratified injection is carried out as a triple injection with a first, a second and a third stratified pilot injection P₁, P₂, P₃ (P₃ indicated in dashed lines in Fig.5) and a main injection M_{S}. The spacing angle A between the end of the first stratified injection and the ignition time IT is also preferably approximately 15 CAD BTDC and approximately -5 CAD BTDC before the piston reaches the top dead center position.

The ignition IT can optionally occur between the first and the main stratified injections P₁, M_{S}, in the case of a double injection, or between the second and the main stratified injections P₂, M_{S}, in the case of a triple injection, or else optionally after the the main injection M_{S}.

According to a further example, the homogeneous pilot injection PH is also carried out as a multiple injection, either as a double or a triple injection (not shown). Said homogeneous double or triple injection further improves the homogeneity of the air/fuel mixture in the entire combustion chamber. Such a homogeneous multiple injection PH can be combined with any one of the exemples described above.

The invention is not limited to the above embodiments, but may be varied freely within the scope of the claims.

## Claims

1. A method for operating a compression ignition internal combustion engine (10) including at least one combustion chamber (18) with a fuel injector (20) for direct fuel injection into a combustion chamber (18), an electronic control unit (ECU) for controlling the fuel injector, and a glow plug (26) for assisting compression ignition of the fuel and combustion air mixture supplied to the combustion chamber (18) in a start phase (T), said method comprising the steps of:
- supplying the combustion air to the combustion chamber (18) in an engine intake stroke;
- performing a start-up-pilot injection (PS) by injecting a start-up pilot fuel quantity by means of the fuel injector (20) into the combustion air supplied to the combustion chamber (18) during a cold start of the internal combustion engine (10), said start-up pilot injection (PS) forming a homogeneous, lean air/fuel mixture in substantially the entire combustion chamber (18); and
- performing a stratified fuel injection by injecting a second fuel quantity into the combustion chamber (18) during a compression stroke directly before the ignition time (IT), said stratified fuel injection (M, P1; P2; P3) being carried out as a multiple injection, comprising at least one pilot injection and a main injection, each forming a stratified, rich air/fuel mixture in the region of the glow plug (26) and autoigniting the stratified rich air/fuel mixture at a predetermined ignition time (IT) during the compression stroke after any one of the stratified fuel injections;
the method being **characterised in that** the start-up pilot injection is performed during a period between initialization of a starter motor until a predetermined engine operating condition has been fulfilled, wherein the predetermined engine operating condition is that the engine reaches an engine speed of 500 rpm, and the start-up pilot injection strategy is then terminated, allowing the speed at the end of the start-up phase of the internal combustion engine to increase towards a predetermined idling speed.

2. A method according to claim 1-5, **characterized in that** the start-up pilot injection comprises 1-30 % of the total injected amount of fuel during an engine cycle.

3. A method according to claim 2, **characterized in that** the start-up pilot injection comprises 10-30%, of the total injected amount of fuel during an engine cycle.

4. A method according to any one of the above claims, **characterized in that** the stratified fuel injection (M, P1, P2, P3) comprises at least two pilot injections and a main injection.

5. A method according to any one of claims 1-4, **characterized in that** the combined amounts for the at least one pilot injection makes up 5-15 % of the total injected amount of fuel.

6. A method according to any one of claims 1-5, **characterized in that** the main injection makes up 50-75 % of the total injected amount of fuel.

7. A method according to any one of claims 1-6, **characterized in that** injection timing and injected amount of fuel for a start-up pilot injection is selected from a map.

8. A method according to claim 7, **characterized in that** the injection timing and injected amount of fuel for a start-up pilot injection selected from the map is dependent on the ambient pressure, coolant temp and oil temperature.

## Patentansprüche

1. Verfahren zum Betreiben eines Verbrennungsmotors (10) mit Kompressionszündung, der mindestens einen Brennraum (18) mit einem Kraftstoffeinspritzer (20) zur direkten Kraftstoffeinspritzung in einen Brennraum (18), eine elektronische Steuereinheit (ECU) zum Steuern des Kraftstoffeinspritzers und eine Glühkerze (26) zum Unterstützen einer Kompressionszündung des dem Brennraum (18) zugeführten Gemischs aus Kraftstoff und Verbrennungsluft in einer Startphase (T) beinhaltet, wobei das Verfahren die folgenden Schritte umfasst:
- Zuführen der Verbrennungsluft in den Brennraum (18) bei einem Ansaughub des Motors,
- Durchführen einer Anlass-Voreinspritzung (PS) durch Einspritzen einer Anlass-Voreinspritz-Kraftstoffmenge mittels des Kraftstoffeinspritzers (20) in die dem Brennraum (18) zugeführte Verbrennungsluft während eines Kaltstarts des Verbrennungsmotors (10), wobei die Anlass-Voreinspritzung (PS) in im Wesentlichen dem gesamten Brennraum (18) ein homogenes, mageres Luft/Kraftstoff-Gemisch bildet, und
- Durchführen einer Schichtladungs-Kraftstoffeinspritzung durch Einspritzen einer zweiten Kraftstoffmenge in den Brennraum (18) während eines Verdichtungshubs unmittelbar vor der Zündzeit (IT), wobei die Schichtladungs-Kraftstoffeinspritzung (M, P1; P2; P3) als eine Mehrfacheinspritzung ausgeführt wird, die mindestens eine Voreinspritzung und eine Haupteinspritzung umfasst, wobei jeweils ein geschichtetes, fettes Luft/Kraftstoff-Gemisch im Bereich der Glühkerze (26) gebildet wird, und Selbstzünden des geschichteten fetten Luft/Kraftstoff-Gemischs zu einer vorab bestimmten Zündzeit (IT) während des Verdichtungshubs nach einer der Schichtladungs-Kraftstoffeinspritzungen, wobei das Verfahren **dadurch gekennzeichnet ist, dass**
die Anlass-Voreinspritzung während einer Periode zwischen einer Initialisierung eines Anlassermotors bis zum Erfüllen einer vorab bestimmten Motorbetriebsbedingung durchgeführt wird, wobei die vorab bestimmte Motorbetriebsbedingung darin besteht, dass der Motor eine Motordrehzahl von 500 UpM erreicht, und die Anlass-Voreinspritzstrategie dann abgeschlossen wird, wodurch die Drehzahl am Ende der Anlassphase des Verbrennungsmotors zu einer vorab bestimmten Leerlaufdrehzahl hin ansteigen kann.

2. Verfahren nach Anspruch 1 bis 5, **dadurch gekennzeichnet, dass** die Anlass-Voreinspritzung 1 bis 30 % der insgesamt während eines Motortakts eingespritzten Kraftstoffmenge umfasst.

3. Verfahren nach Anspruch 2, **dadurch gekennzeichnet, dass** die Anlass-Voreinspritzung 10 bis 30 % der insgesamt während eines Motortakts eingespritzten Kraftstoffmenge umfasst.

4. Verfahren nach einem der vorstehenden Ansprüche, **dadurch gekennzeichnet, dass** die Schichtladungs-Kraftstoffeinspritzung (M, P1, P2, P3) mindestens zwei Voreinspritzungen und eine Haupteinspritzung umfasst.

5. Verfahren nach einem der Ansprüche 1 bis 4, **dadurch gekennzeichnet, dass** die kombinierten Mengen für die mindestens eine Voreinspritzung 5 bis 15 % der insgesamt eingespritzten Kraftstoffmenge ausmachen.

6. Verfahren nach einem der Ansprüche 1 bis 5, **dadurch gekennzeichnet, dass** die Haupteinspritzung 50 bis 75 % der insgesamt eingespritzten Kraftstoffmenge ausmacht.

7. Verfahren nach einem der Ansprüche 1 bis 6, **dadurch gekennzeichnet, dass** der Einspritzzeitpunkt und die eingespritzte Menge an Kraftstoff für eine Anlass-Voreinspritzung aus einem Kennfeld ausgewählt werden.

8. Verfahren nach Anspruch 7, **dadurch gekennzeichnet, dass** der Einspritzzeitpunkt und die eingespritzte Menge an Kraftstoff für eine Anlass-Voreinspritzung, die aus dem Kennfeld ausgewählt werden, von Umgebungsdruck, Kühlmitteltemperatur und Öltemperatur abhängen.

## Revendications

1. Procédé pour faire fonctionner un moteur à combustion interne à allumage par compression (10) comprenant au moins une chambre de combustion (18) avec un injecteur de carburant (20) pour une injection directe de carburant dans une chambre de combustion (18), une unité de commande électronique (ECU) pour commander l'injecteur de carburant, et une bougie de préchauffage (26) pour assister l'allumage par compression du carburant et du mélange air comburant fourni à la chambre de combustion (18) pendant la phase initiale (T), ce procédé comprenant les étapes consistant à :
fournir l'air de combustion à la chambre de combustion (18) lors d'une course d'admission du moteur ;
effectuer une injection pilote de démarrage (PS) par injection d'une quantité de carburant pilote de démarrage au moyen de l'injecteur de carburant (20) dans l'air de combustion fourni à la chambre de combustion (18) pendant un démarrage à froid du moteur à combustion interne (10), ladite injection pilote de démarrage (PS) formant un mélange air/carburant pauvre et homogène dans sensiblement toute la chambre de combustion (18) ; et
effectuer une injection de carburant stratifiée par injection d'une seconde quantité de carburant dans la chambre de combustion (18) pendant une course de compression directement avant le temps d'allumage (IT), ladite injection de carburant stratifiée (M, P1 ; P2 ; P3) étant effectuée en tant qu'injection multiple, comprenant au moins une injection pilote et une injection principale, chacune formant un mélange air/carburant riche et stratifié dans la région de la bougie de préchauffage (26) et auto-allumant le mélange air/carburant riche et stratifié à un temps d'allumage (IT) prédéfini pendant la course de compression après l'une quelconque des injections de carburant stratifiées ;
le procédé étant **caractérisé en ce que**
l'injection pilote de démarrage est effectuée pendant une période entre l'initialisation d'un moteur de démarrage jusqu'à ce qu'une condition prédéfinie de fonctionnement du moteur ait été remplie, la condition prédéfinie de fonctionnement du moteur étant que le moteur atteint un régime moteur de 500 tr/min, et la stratégie d'injection pilote de démarrage est alors terminée, permettant au régime à la fin de la phase de démarrage du moteur à combustion interne d'augmenter vers un régime de ralenti prédéfini.

2. Procédé selon la revendication 1 à 5, **caractérisé en ce que** l'injection pilote de démarrage comprend de 1 à 30 % de la quantité injectée totale de carburant pendant un cycle moteur.

3. Procédé selon la revendication 2, **caractérisé en ce que** l'injection pilote de démarrage comprend de 10 à 30 % de la quantité injectée totale de carburant pendant un cycle moteur.

4. Procédé selon l'une quelconque des revendications précédentes, **caractérisé en ce que** l'injection de carburant stratifiée (M, P1, P2, P3) comprend au moins deux injections pilotes et une injection principale.

5. Procédé selon l'une quelconque des revendications 1 à 4, **caractérisé en ce que** les quantités combinées pour l'au moins une injection pilote représentent 5 à 15 % de la quantité injectée totale de carburant.

6. Procédé selon l'une quelconque des revendications 1 à 5, **caractérisé en ce que** l'injection principale représente 50 à 75 % de la quantité injectée totale de carburant.

7. Procédé selon l'une quelconque des revendications 1 à 6, **caractérisé en ce que** l'avance à l'injection et la quantité injectée de carburant pour une injection pilote de démarrage sont choisies à partir d'une carte.

8. Procédé selon la revendication 7, **caractérisé en ce que** le temps d'injection et la quantité injectée de carburant pour une injection pilote de démarrage choisie à partir de la carte dépendent de la pression ambiante, de la température du liquide de refroidissement et de la température de l'huile.
